# EUROPEAN PATENT SPECIFICATION

(11) **EP 3 200 402 B1**
(45) Date of publication and mention of the grant of the patent: **27.03.2019**
(21) Application number: 15803970.1
(22) Date of filing: 09.02.2015
(51) Int. Cl.: H04L 12/715, H04L 12/723

(54) **SEGMENT ROUTING INFORMATION OBTAINMENT METHOD AND SEGMENT ROUTING NETWORK ESTABLISHMENT METHOD**
VERFAHREN ZUR GEWINNUNG VON SEGMENT-ROUTING-INFORMATIONEN UND VERFAHREN ZUR EINRICHTUNG EINES SEGMENT-ROUTING-NETZWERKS
PROCÉDÉ D'OBTENTION D'INFORMATIONS DE ROUTAGE PAR SEGMENT, ET PROCÉDÉ D'ÉTABLISSEMENT DE RÉSEAU DE ROUTAGE PAR SEGMENT

(30) Priority: 27.10.2014 CN 201410583809
(43) Date of publication of application: 02.08.2017
(73) Proprietor: ZTE Corporation, Shenzhen, Guangdong 518057 (CN)
(72) Inventor: CHEN, Ran, Shenzhen Guangdong 518057 (CN); PENG, Shaofu, Shenzhen Guangdong 518057 (CN); XU, Yongfan, Shenzhen Guangdong 518057 (CN); TANG, Yin, Shenzhen Guangdong 518057 (CN)
(74) Representative: AWA Sweden AB
(86) International application number: PCT/CN2015/072583
(87) International publication number: WO 2015/184852

(56) References cited:
- WO-A2-2005/062819
- CN-A- 1 968 178
- CN-A- 101 040 487
- CN-A- 101 047 651
- CN-A- 102 137 015
- CN-A- 104 052 666
- US-A1- 2011 286 466
- US-A1- 2014 269 266
- GREDLER H ET AL: "BGP Link-State extensions for Segment Routing; draft-gredler-bgp-ls-segment-routing-exten sions-00.txt", BGP LINK-STATE EXTENSIONS FOR SEGMENT ROUTING; DRAFT-GREDLER-BGP-LS-SEGMENT-ROUTING-EXTEN SIONS-00.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, 12 February 2014 (2014-02-12), pages 1-11, XP015096640, [retrieved on 2014-02-12]
- FILSFILS C ET AL: "Segment Routing Architecture; draft-filsfils-spring-segment-routing-00.t xt", SEGMENT ROUTING ARCHITECTURE; DRAFT-FILSFILS-SPRING-SEGMENT-ROUTING-00.T XT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, 23 April 2014 (2014-04-23), pages 1-28, XP015098817, [retrieved on 2014-04-23]

## Description

### Technical Field

The present invention relates to a segment routing (SR) technology, in particular to an SR information acquisition method and an SR network establishment method.

### Background

A typical service bearer network includes a Customer Edge (CE) router, a Provider Edge (PE) router, a Provider backbone (P) router, and a Route Reflector (RR). In general, Open Shortest Path First Protocol (OSPF) /Intermediate System to Intermediate System Routing Protocol (IS-IS) is used as internal gateway protocol (IGP), BGP-4 multi-protocol extended border gateway protocol (MP-BGP, wherein, BGP is the border gateway protocol) is used to transfer Virtual Private Network (VPN) information, Label-Distribution Protocol (LDP) is used to distribute labels, and Resource Reservation Protocol-Traffic Management Protocol-Traffic Engineering (RSVP-TE) is used to deploy traffic engineering and bandwidth reservation for specific applications or destination services. However, there are several problems in the typical service bearer network deployment: there are many types of routing protocols and deployments are complicated; due to a forwarding mechanism based on a destination address, the forwarding of data packet cannot be carried out on the basis of requirements of each source end; when the source end meets requirements of bandwidth and time delay of a specific application, it cannot dynamically deploy according to the network situation, when a link is congested in the network, the forwarding path can not be automatically adjusted; the bandwidth reservation can be implemented with Resource Reservation Protocol (RSVP), however, in the actual deployment, a mode of static configuration and dynamic deployment is used. In addition, perfect bandwidth protection is intended to be achieved, full-mesh RSVP-TE needs to be deployed with large resource consumption. RSVP technology is already mature, but the actual deployment ratio is very low.

Based on the above problems, IETF proposed segment routing (SR) technology, SR is a method for routing based on a source address, by superimposing a layer of SR information which affects the existing shortest path forwarding outside the data packet, the shortest path forwarding is performed on the data packet according to the specified path node information. SR information mainly refers to that the segment routing of the node is composed of two parts, i.e., SR Global Block (SRGB) and offset (index), index of each node is unique, offsetting is performed in SRGB range in accordance with the index value, then the node can be identified. Through the SR designated path forwarding function, the network load balancing and process engineering can be easily achieved, as well as other complex network functions such as fast rerouting.

The related protocol carries SR information by extending the IGP, it also called segment information, to implement SR information notification and interchanging within the IGP domain and to establish SR networks within the IGP domain.

However, for cross-domain scenarios, especially the VPN Option C cross-domain scenario, it is necessary to construct a public network tunnel between the source end PE and the sink end PE. If the public network tunnel is of an SR network, there is no corresponding technology scheme to achieve SR information interchanging across domains, it is unable to establish SR network. Herein, cross-domain MP-BGP MPLS/VPN Option C refers to the establishment of multi-hop MP-EBGP between PEs. The public network reachability between PEs is implemented by redistributing the BGP routing in the IGP by the autonomous system border router (ASBR), or the ASBR notifies to the PE through the IBGP protocol. The protocol level is fairly simple, similar to single-domain MP-BGP MPLS/VPN.

US 20140269266 A1 discloses a method and system for use of segment routing in monitoring of a network path.

GREDLER H ET AL: "BGP Link-State extension for Segment Routing; draft-gredler-bgp-ls-segment-routing-extensions-OO.txt", BGP LINK-STATE EXTENSIONS FOR SEGMENT ROUTING discloses Segment Routing.

US 2011286466 A1 disclose a number automatic routing method, an updating method, a withdrawing method, a router and a device.

### Summary

In a first aspect, the invention provides a segment routing, SR, information acquisition method comprising: notifying and interchanging the SR information between cross-domain nodes within the SR domain through an extended multi-protocol border gateway protocol, MP-BGP, or notifying and interchanging the SR information between border nodes within the AS domain and the cross-domain nodes through the extended MP-BGP; wherein the SR information comprises at least one or more pieces of segment routing global block, SRGB, and an offset, index; wherein the extended MP-BGP comprises: in BGP-based Multi-Protocol Reachable Network Layer Reachability Information, MP_REACH_NLRI, adding an Address Family Identifier, AFI, for identifying an SR, one or more Subsequent Address Family Identifiers, SAFIs, and BGP Network Layer Reachability Information, NLRI, for carrying SRGB and index; the method further comprising: notifying the index through the added NLRI, while carrying the SRGB through an extended Open message; or, carrying both the index and SRGB through a path attribute in an extended Update message.

In an exemplary embodiment, a format of the added NLRI is a TLV format.

In an exemplary embodiment, when the Index and SRGB in the SR information being both carried by the NLRI,
the step of notifying and interchanging the SR information between cross-domain nodes within SR domain through an extended MP-BGP comprises: when an IGP route is imported into the BGP protocol, importing an MP-BGP route into the IGP protocol, importing the index and SRGB along with the route;
the step of notifying and interchanging the SR information between border nodes within the AS domain and the cross-domain nodes through the extended MP-BGP comprises: when the MP-BGP both is used between both the border nodes within the AS domain and the cross-domain nodes, not importing an MP-BGP on an autonomous system border router (ASBR) node into the IGP protocol.

In an exemplary embodiment, the method further includes: determining whether the SR information is notified each other through the MP-BGP between the border nodes in the AS domain according to a configuration in the following way that:
when an SR-enabled dynamic IGP protocol is configured in the AS domain, it is not necessary to notify through the MP-BGP; when only a static route is configured in the AS domain, it is necessary to notify through the MP-BGP.

In an exemplary embodiment, when the index is notified by the NLRI, the SRGB is notified by an extended Open message,
the step of notifying and interchanging the SR information between cross-domain nodes within the SR domain through an extended MP-BGP comprises: when the IGP route is imported into the BGP protocol and the MP-BGP route is imported into the IGP protocol, importing the index along with the route; wherein the SRGB notification is the SRGB information of the node itself;
the step of notifying and interchanging the SR information between border nodes within the AS domain and the cross-domain nodes through the extended MP-BGP comprises: when the MP-BGP is used between both the border nodes within the AS domain and the cross-domain nodes, not importing the MP-BGP on the ASBR node into the IGP protocol, notifying and interchanging the SR information of current nodes between the border nodes in the AS domain and the cross-domain nodes through the extended MP-BGP protocol.

In an exemplary embodiment, the index and SRGB are both carried by a path attribute in the extended Update message.
the step of notifying and interchanging the SR information between cross-domain nodes within the SR domain through an extended MP-BGP comprises: when the IGP route is imported into the BGP protocol and the MP-BGP route is imported into the IGP protocol, importing the index and the SRGB along with the route;
the step of notifying and interchanging the SR information between border nodes within the AS domain and the cross-domain nodes through the extended MP-BGP comprises: when the MP-BGP is used between both the border nodes within the AS domain and the cross-domain nodes, not importing the MP-BGP on the ASBR node into IGP protocol, notifying and interchanging the SR information of current nodes between the border nodes in the AS domain and the cross-domain nodes through the extended MP-BGP protocol.

In a second aspect, the invention provides a segment routing, SR, network establishment method, comprising: a head node obtaining an SR information list, SR list, according to any one of the abovementioned SR information acquisition methods of the first aspect of the invention; the head node carrying the SR list outside a data packet, and performing shortest path forwarding on the data packet according to SR information specified by the SR list.

In an exemplary embodiment, the header node obtaining the SR list includes: issuing by a centralized device, or generating or configuring statically according to segmented path information and the SR information.

In an exemplary embodiment, the node obtains the SR list by issuing by the centralized device; the method further includes:
the controller obtaining the SR information of all nodes in the SR domain through an extended BGP.

Also provided is a computer program, including program instructions, which, when being executed by a computer, enable the computer to execute any one of the abovementioned SR information acquisition methods.

Also provided is a carrier, carrying the computer program.

Also provided is a computer program, including program instructions, which, when being executed by a computer, enable the computer to execute any one of the abovementioned SR network establishment methods.

Also provided is a carrier, carrying the computer program.

Compared with the related technology, the technical scheme of the present application includes notifying each other the SR information between nodes in an AS domain within an SR domain through an IGP; notifying and interchanging the SR information between cross-domain nodes within the SR domain through an extended BGP, or notifying and interchanging the SR information between border nodes within the AS domain and the cross-domain nodes through the extended BGP.

Through the method of the technical scheme of the present invention, the SR information of the cross-domain nodes within the SR domain is notified and interchanged by extending the BGP between the different AS domains, such that the border nodes of different AS domains in the SR domain all know each other their own SR information, realizing the interchanging of SR Information in cross-domain scenario.

Further, using the SR information obtained with the method of the technical scheme of the present invention, the head node acquires the SR information list (SR list), carries the generated SR list outside the data packet, and the shortest path forwarding is performed on the data packet according to the SR information specified by the SR list, thus enabling the establishment of an end to end SR network.

Other features and advantages of the present invention are described in the following description, and become apparent in part from the description, or are understood by implementing the present invention. The purpose and other advantages of the present invention can be implemented and obtained with the structure which is specified in the description, claims and accompanying drawings.

### Brief Description of Drawings

The drawings described here are used for providing further understanding about the present invention and constitute a part of the present application. The exemplary embodiments of the present invention and the description thereof are used for explaining the present invention instead of improperly limiting the present invention. In the drawings:
FIG. 1 is a flow chart of SR information acquisition method according to an embodiment of the present invention.
FIG. 2 is a schematic diagram of a centralized architecture network in which an SR information acquisition method according to an embodiment of the present invention is applied.
FIG. 3 is a schematic diagram of a distributed architecture network in which an SR information acquisition method according to an embodiment of the present invention is applied.
FIG. 4 is a schematic diagram of a data packet format carrying an SR packet header in a first embodiment and a second embodiment of forwarding a data packet of the present invention;
FIG. 5 is a schematic diagram of a data packet format carrying an SR packet header in a third embodiment of forwarding a data packet of the present invention;
FIG. 6 is a schematic diagram of a data packet format carrying an SR packet header in a fourth embodiment of forwarding a data packet of the present invention;
FIG. 7 is a schematic diagram of a data packet format carrying an SR packet header in a fifth embodiment of forwarding a data packet of the present invention;
FIG. 8 is a schematic diagram of a data packet format carrying an SR packet header in a sixth embodiment of forwarding a data packet of the present invention.

### Detailed Description

Hereinafter, in conjunction with the accompanying drawings, embodiments of the present invention will be described in detail. It should be illustrated that, under the situation of no conflict, the embodiments and the features in the embodiments in the present application can be freely combined.

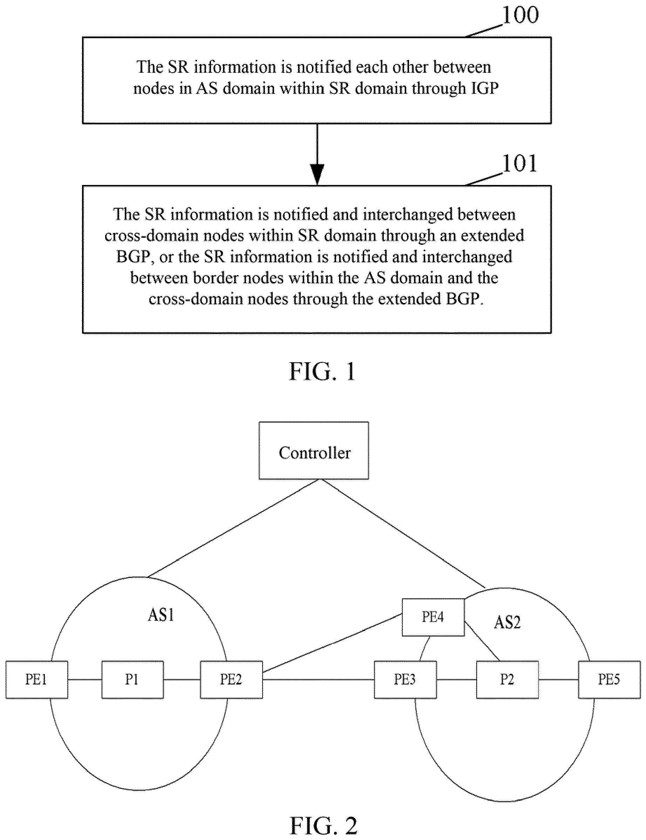

FIG. 1 is a flow chart of SR information acquisition method according to an embodiment of the present invention, as shown in FIG.1, including the following steps.

In Step 100, the SR information is notified each other between nodes in AS domain within SR domain through IGP.

The implementation of the step belongs to the common technology of the people skilled in the art, the specific implementation is not used to limit the protection scope of the present invention, and will not be repeated here.

In Step 101, the SR information is notified and interchanged between cross-domain nodes within SR domain through an extended MP-BGP, or the SR information is notified and interchanged between border nodes within the AS domain and the cross-domain nodes through the extended MP-BGP.

Herein, the SR information includes at least SRGB information and index information.

The extended MP-BGP includes: adding an Address Family Identifier (AFI) for identifying the SR information, one or more Subsequent Address Family Identifier (SAFI) for identifying the unicast of the SR information and the multicast of the SR information, and new BGP Network Reachability Information (NLRI) for carrying the SR information, which is used for notifying and interchanging the SR information in the BGP-based Multi-protocol Reachable Network Reachability Information (MP_REACH_NLRI).

Herein, a format of the added NLRI format is a TLV format.

In the embodiment, the SRGB and the index are both carried through the added NLRI.

In the embodiment, SRGB information may also be carried in an extended Open message, while the index is carried through NLRI. Specifically, an SRGB TLV for carrying SRGB information can be newly extended in the Optional Parameters item of the Open message. There can be multiple SRGB TLVs.

In the embodiment, the SR information, i.e., index and SRGB, can also be carried in the path attribute in the extended Update message. Specifically, one or more TLVs for carrying SR information may be added in the path attribute of the Update message.

It should be noted that, there is no strict sequence between the step 100 and the step 101.

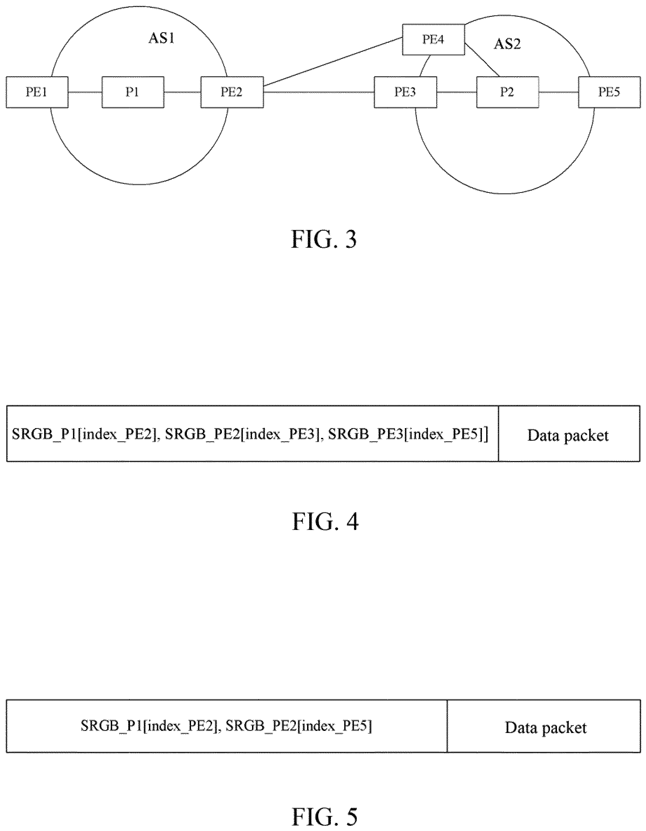

If the Index and the SRGB are both carried through the extended NLRI, as shown in FIG. 2 or FIG. 3, the step that the SR information is notified and interchanged between cross-domain nodes within SR domain through the MP-BGP includes: when the IGP route is imported into the BGP protocol and the MP-BGP route is imported into the IGP protocol, the index and the SRGB are imported along with the route.

Herein, the specific implementation for importing IGP route into the BGP protocol, importing MP-BGP route into the IGP protocol is the common technology of the people skilled in the art, it is not used to limit the protection scope of the present invention. However, in order to facilitate understanding, the following will illustrate through simple instances. For example, in FIG.2, importing IGP route into the BGP protocol refers to: the PE3 node of the right AS importing the loopback route (typically, the IGP route) of the PE/ASBR node in the AS where it is located into EBGP, and notifying to the PE2 node of the left AS. At this time, the SRGB and index of the PE/ASBR node can be imported along with the route. Importing MP-BGP route into the IGP protocol refers to: the PE2 node of the left AS directly importing the EBGP route into IGP domain of the present AS according to the configuration policy on the current node after receiving the above EBGP route notification. At this time, the SRGB and index of the PE/ASBR node (of the right AS) can be imported along with the route. The purpose is to let ingress PE of the left AS learn the SRGB and INDEX information of PE/ASBR of the right AS, such that it calculates the egress label stack according to the segment list. Because the segment list may contain PE / ASBR nodes of many other ASs, of course, SRGB and index information of these PE/ASBRs are needed. Index and SRGB are imported along with the route refers to: if the IGP route prefix 1 is imported into BGP to notify the remote BGP neighbor on the PE3 node, the index and SRGB corresponding to the prefix1 are also imported into BGP to notify the remote BGP neighbor.

The step that the SR information is notified and interchanged between border nodes within the AS domain and the cross-domain nodes through the MP-BGP includes: when the MP-BGP is used between both the border nodes within the AS domain and the cross-domain nodes, MP-BGP on the ASBR node is not imported into the IGP protocol.

It should be noted that, whether the border nodes in the AS domain notify each other the SR information through MP-BGP is depended on the configuration, if the SR-enabled dynamic IGP protocol is configured in the AS domain, it is not needed to notify through the MP-BGP; if only a static route is configured in the AS domain, it is needed to notify through the MP-BGP.

In this step, that the SR information is notified and interchanged through an extended BGP includes: the SR information of the node is notified and interchanged between border nodes within the AS domain and the cross-domain nodes through the extended MP-BGP. Specifically, the SRGB and Index are both notified through the extended NLRI.

Through the method of the embodiment of the present invention, the SR information of the cross-domain nodes within the SR domain is notified and interchanged by extending the BGP between the different AS domains, such that the border nodes of different AS domains in the SR domain all know each other their own SR information, realizing the interchanging of SR Information in cross-domain scenario.

If Index is notified through the extended NLRI, SRGB is carried by the extended Open message, as shown in FIG. 2, the step that the SR information is notified and interchanged between cross-domain nodes within SR domain through the MP-BGP includes: when the IGP route is imported into the BGP protocol and the MP-BGP route is imported into the IGP protocol, the index is imported along with the route; due to the SRGB notification using the extended Open message, there is no concept of importing, just the SRGB information of the node itself is notified. A node receives the Open message carrying SRGB which is sent from the neighbor and uses the message for calculating the egress label for the label entry on the node.

The step that the SR information is notified and interchanged between border nodes within the AS domain and the cross-domain nodes through the MP-BGP includes: when the MP-BGP is used between both the border nodes within the AS domain and the cross-domain nodes, MP-BGP on the ASBR node not is imported into the IGP protocol.

It should be noted that, whether the border nodes in the AS domain notify each other the SR information through MP-BGP is depended on the configuration, if the SR-enabled dynamic IGP protocol is configured in the AS domain, it is not needed to notify through the MP-BGP; if only a static route is configured in the AS domain, it is needed to notify through the MP-BGP.

In this step, that the SR information is notified and interchanged through an extended MP-BGP includes: the SR information of the node is notified and interchanged between border nodes within the AS domain and the cross-domain nodes through the MP-BGP protocol. Specifically, Index is notified through the extended NLRI, and the SRGB is notified using the extended Open message.

Through the method of the embodiment of the present invention, the SR information of the cross-domain nodes within the SR domain is notified and interchanged by extending the BGP between the different AS domains, such that the border nodes of different AS domains in the SR domain all know each other their own SR information, realizing the interchanging of SR Information in cross-domain scenario.

It should be noted that, in this scenario, the SR list can only be issued by the controller to the head node. The controller needs to know whether a border node in the AS domain has imported the route. Importing and not importing affects the SR list value calculated by the controller. For the case that the route is imported, the egress label corresponding to the first segment calculated by the controller is a label assigned by the directly-connected next hop of the segment on the head node to the segment.

For the case that the route is not imported, the egress label corresponding to the first segment calculated by the controller is a label assigned by the non-directly-connected next hop of the segment on the head node to the segment and then it iterates the public network outer layer tunnel.

If Index and SRGB are both carried by the path attribute in the extended Update message, as shown in FIG. 2 or FIG. 3, the step that the SR information is notified and interchanged between cross-domain nodes within SR domain through the extended MP-BGP includes: when the IGP route is imported into the BGP protocol and the MP-BGP route is imported into the IGP protocol, the index and the SRGB is imported along with the route.

The step that the SR information is notified and interchanged between border nodes within the AS domain and the cross-domain nodes through the extended MP-BGP includes: when the MP-BGP is used between both the border nodes within the AS domain and the cross-domain nodes, MP-BGP on the ASBR node not is imported into the IGP protocol.

It should be noted that, whether the border nodes in the AS domain notify each other the SR information through MP-BGP is depended on the configuration, if the SR-enabled dynamic IGP protocol is configured in the AS domain, it is not needed to notify through the MP-BGP; if only a static route is configured in the AS domain, it is needed to notify through the MP-BGP.

In this step, that the SR information is notified and interchanged through an extended MP-BGP includes: the SR information of the node is notified and interchanged between border nodes within the AS domain and the cross-domain nodes through the extended MP-BGP. Specifically, the SRGB and the Index are both notified by the path attribute in the extended Update message.

Through the method of the embodiment of the present invention, the SR information of the cross-domain nodes within the SR domain is notified and interchanged by extending the BGP between the different AS domains, such that the border nodes of different AS domains in the SR domain all know each other their own SR information, realizing the interchanging of SR Information in cross-domain scenario.

The method of the embodiment of the present invention further includes:
the head node obtaining the SR information list (SR list) according to the SR information obtained with the method of the embodiment of the present invention shown in FIG.1, carrying the generated SR list outside the data packet, and performing shortest path forwarding on the data packet according to the SR information specified by the SR list. Thus, an end-to-end SR network is established.

Here, the head node obtaining the SR list includes: issuing by a centralized device such as the controller, or generating or configuring statically by the head node according to segment path information and the SR information. Herein, when the SR list on the head node is issued by a centralized device such as the controller, the controller obtains the SR information of all the nodes in the SR domain, that is SRGB and index information. The method of the present invention will be described in detail in combination with the specific embodiments below.

FIG. 2 is a schematic diagram of a centralized architecture network for applying the SR information acquisition method according to the embodiment of the present invention, FIG. 3 is a schematic diagram of a distributed architecture network for the SR information acquisition method according to the embodiment of the present invention. As shown in FIG. 2 or FIG. 3, the P1 nodes in AS1 domain are directly connected with PE1 and PE2 respectively, the P2 nodes in AS2 domain are directly connected with PE3, PE4 and PE5 respectively. Here, in order to describe easily, the SRGB of PE1 is defined as SRGB_PE1, the index is index_PE1; the SRGB of P1 is SRGB_P1, the index is index_P1; the SRGB of PE2 is SRGB_PE2, the index is index_PE2; the SRGB of PE3 is SRGB_PE3, the index is index_PE3; the SRGB of PE4 is SRGB_PF4, the index is index_PE4; the SRGB of P2 is SRGB_P2, the index is index_P2; the SRGB of PE5 is SRGB_PE5,the index is index_PE5. The following embodiments are described in connection with the network architecture of FIG. 2 and FIG. 3.

If the index and SRGB are notified through the extended NLRI, one way is, when the IGP route is imported into the BGP protocol, and the MP-BGP route is imported into the IGP protocol, the step of notifying and interchanging SR information by the extended BGP includes: the index is imported along with the route.

As shown in FIG. 2 or FIG. 3, the acquisition of the SR information of the embodiment of the present invention specifically includes: the acquisition process of the index and the acquisition process of the SRGB.

The Index information is notified through the extended NLRI, its acquisition process is as follows.

PE3 in the AS2 domain obtains the index of other nodes, such as P2, PE4, PE5, etc. in the AS2 domain where it is located through the IGP protocol in the AS2 domain.

By configuring, PE3 only imports the index information of a border node of AS2 domain into BGP protocol through IGP and notifies to PE2 through extended MP-BGP, in this way, PE2 gets index_PE3, index_PE4, and index_PE5; PE2 imports the collected index information into the IGP protocol through BGP, the nodes in the AS1 domain notify each other their own indexes and the indexes of nodes of other domains collected by PE2 through the IGP protocol, thus, P1 gets index_PE1, index_PE2, index_PE3, index PE4 and index PE5. PE1 gets index_P1, index_PE2, index_PE3, index_PE4 and index_PE5.

Similarly, PE3 gets index_PE1, index_PE2, index_PE4, index_P2 and index_PE5; P2 gets index_PE1, index_PE2, index_PE3, index_PE4 and index_PE5; PE5 gets index_PE1, index_PE2, index_PE3, index_PE4, index_P2 and index_PE5.

SRGB information is notified through the extended NLRI, and its acquisition process is as follows.

PE3 in the AS2 domain obtains the SRGB of other nodes such as P2, PE4, PE5, etc. in the AS2 domain where it is located, through the IGP protocol in the AS2 domain.

By configuring, PE3 imports the SRGB information of a border node of AS2 domain into BGP protocol through IGP and notifies to PE2 through extended BGP protocol, therefore, PE2 gets SRGB_PE3, SRGB_PE4 and SRGB_PE5.

PE2 imports the collected SRGB information through BGP to the IGP protocol, the nodes in the AS 1 domain notify each other their own SRGB information and the SRGB information of the nodes of other domains collected by PE2 through the IGP protocol. In this way, P1 gets SRGB_PE1, SRGB_PE2, SRGB_PE3, SRGB_PE4, and SRGB PE5. PE1 gets SRGB_P1, SRGB_PE2, SRGB_PE3, SRGB_PE4 and SRGB_PE5.

Similarly, PE3 gets SRGB_PE1, SRGB_PE2, SRGB_PF4, SRGB_P2 and SRGB_PE5. P2 gets SRGB_PE1, SRGB_PE2, SRGB_PE3, SRGB_PE4 and SRGB_PE5. PE5 gets SRGB PE1, SRGB_PE2, SRGB_PE3, SRGB_PE4, SRGB_P2 and SRGB_PE5.

Another way is that, when MP-BGP is used between both the border nodes in the AS domain and the cross-domain nodes, MP-BGP on an ASBR node is not imported into the IGP protocol. As shown in FIG. 2 or FIG. 3, acquiring the SR information of the embodiment of the present invention specifically includes: between PE1 and PE2, PE2 and PE3, PE2 and PE4, PE3 and PE5, and PE4 and PE5, besides the SRGB and index of the present node being notified each other through MP-BGP, the SRGBs and indexes of other nodes learned by the present node through BGP should be notified.

It should be noted that, whether the border nodes in the present domain notify each other the SR information through MP-BGP is depended on configuration, if the SR-enabled IGP protocol is configured in the domain, it is not needed to notify through the MP-BGP; otherwise, only a static route is configured in the domain, it is needed to notify through the MP-BGP.

Their own SRGBs and indexes are notified each other between PE3 and PE5 through the extended MP-BGP protocol. PE3 gets index_PE5 and SRGB_PE5.

Besides their own SRGBs and indexes are notified each other by the extended MP-BGP protocol between PE2 and PE3, the SRGBs and indexes of other nodes learned by the present node through BGP should be notified. Then, in addition to getting index_PE3 and SRGB_PE3 on the PE2, it also gets index_PE5 and SRGB_PE5.

Besides their own SRGBs and indexes are notified each other by the extended MP-BGP protocol between PE1 and PE2, the SRGBs and indexes of other nodes learned by the present node through BGP should be notified. Then, in addition to getting index_PE2 and SRGB_PE2 on the PE1, it also gets index_PE3 and SRGB_PE3, index_PE5 and SRGB_PE5.

If the SR-enabled dynamic IGP protocol is configured in the AS domain, each node in the AS domain also uses the IGP protocol to notify its own SRGB and index. The process is consistent with the process of the related technology, and will not be repeated here.

Thus, finally, PE1 also obtains SRGB_PE3, SRGB_PF4, SRGB_PE5 and index_PE3, index_PE4, index_PE5 in addition to obtaining the SRGB and index of a node in the AS1 domain where it is located. PE2 also obtains SRGB_PE3, SRGB_PF4, SRGB_PE5 and index_PE3, index_PE4, index_PE5 in addition to obtaining the SRGB and index of a node in the AS1 domain where it is located. PE3 also obtains SRGB_PE1, SRGB_PE2 and index_PE1, index_PE2 in addition to obtaining the SRGB and index of the node in the AS2 domain where it is located. PE4 also obtains SRGB_PE1, SRGB_PE2 and index _PE1, index_PE2 in addition to obtaining the SRGB and index of the node in the AS2 domain where it is located. PE5 also obtains SRGB_PE3, SRGB_PE4 and index _PE1, index_PE2 in addition to obtaining the SRGB and index of the node in the AS2 domain where it is located.

If the index is notified through the extended NLRI, the SRGB is notified through the extended Open message, compared with the above method, the difference is only in the SRGB notification, here, only the SRGB acquisition process is focused.

One way is that, when the IGP route is imported into the BGP protocol and the MP-BGP route is imported into the IGP protocol, notifying and interchanging the SR information through an extended BGP in the step includes: the index is imported along with the route; as the SRGB uses the extended Open message to notify, there is no concept of importing, just the SRGB information of the node itself is notified.

The SRGB information is notified by the extended Open message, and the acquisition process is as follows.

PE3 in the AS2 domain obtains the SRGB of other nodes, such as P2, PE4, PE5, etc. in the AS2 domain where it is located through the IGP protocol in the AS2 domain.

PE3 only notifies its own SRGB information to PE2 through the extended BGP protocol, so that PE2 gets SRGB_PE3.

PE2 only notifies its own SRGB information to other nodes in the AS1 domain through the IGP protocol. All nodes in the AS1 domain know their own SRGB information each other.

Another way is that, when MP-BGP is used between both the border nodes in the AS domain and the cross-domain nodes, MP-BGP on the ASBR nodes is not imported into the IGP protocol. It is necessary to note that, whether the border nodes in the present domain notify each other the SR information through MP-BGP is depended on configuration, if the SR-enabled IGP protocol is configured in the domain, it is not needed to notify through the MP-BGP; otherwise, only a static route is configured in the domain, it is needed to notify through the MP-BGP.

In this step, notifying and interchanging the SR information through an extended BGP includes: the SR information of the present node is notified and interchanged between border nodes within the AS domain and the cross-domain nodes through the extended MP-BGP. Specifically, Index is notified by the extended NLRI, and the SRGB uses the extended Open message to notify.

The SRGB information is notified through the extended Open message, and the acquisition process is as follows.

PE3 in AS2 domain gets SRGBs of other border nodes, such as, the SRGBs of PE4 and PE5 in AS2 domain, through the extended BGP protocol.

PE3 only notifies its own SRGB information to PE2 through the extended BGP protocol, so that PE2 gets SRGB_PE3.

PE2 only notifies its own SRGB information to other border nodes in the AS1 domain through the extended BGP protocol, such as PE1.

If Index and SRGB are notified through the path attribute in the extended Update message, as the BGP update message is used for notifying in the method, just the specific locations for bearing the SR are different, the acquisition result of the index and SRGB is the same as the acquisition result of which Index and SRGB both are notified through the extended NLRI, which will not be described further here.

An ingress label of the relevant label entry on all segment nodes in SR list is a label of the segment notified to the upstream node for the next segment. An egress label is the SRGB of corresponding next hop of the next segment, the index is the index of the next segment, if the corresponding next hop of the next segment here is a non-directly connected next hop, it is also necessary to iterate the label of the outer layer tunnel.

It should be illustrated that:
1) the ingress label of the relevant label entry on the last segment node is a label notified to the upstream node for the destination Forwarding Equivalence Class (FEC). The egress label is SRGB of corresponding next hop of the destination FEC, index is the index of the destination FEC, here if the next hop corresponding to the destination FEC is a non-directly connected next hop, it is also necessary to iterate the label of the outer layer tunnel. Herein, FEC is a term used in MPLS to describe groups that have a same forwarding processing manner (the same destination, using the same forwarding path, or having the same class of service, etc.) as one class, called the forwarding equivalence class. The groups belonging to the same forwarding equivalence class will get exactly the same processing in the same MPLS network.
2) If the last segment node is the node where the destination FEC is located, the ingress label of the associated label entry on the segment node is a label of the segment notified to the upstream node for the destination FEC, and the egress label is empty.

FIG. 4 is a schematic diagram of a data packet format carrying an SR packet header in the first embodiment and the second embodiment of forwarding a data packet of the present invention, in the first embodiment, it is assumed that an end-to-end tunnel from PE1 to PE5 is specified to pass PE2, PE3 and PE5; in this embodiment, it is assumed that in the scenario of importing the route, an egress label corresponding to the first segment calculated by the controller is a label assigned by the directly-connected next hop of the segment on the head node to the segment, and, assuming that, the SR list on PE1 is issued by the controller such as a centralized device, then the SR list issued by the controller is: [SRGB_P1 [index_PE2], SRGB_PE2 [index_PE3], SRGB_PE3 [index_PE5]], the data packet format issued on PE1 is shown in FIG. 4, combined with FIG.2 or FIG.4, the forwarding process of data packets is as follows.

P1 is the direct connected next hop of PE1. After P1 receives the data packet, it searches the label forwarding table according to the outer layer label SRGB_P1 [index_PE2] of the SR list, pops the outer layer label and forwards the data packet to PE2.

PE2 is the direct connected next hop of P1. After PE2 receives the data packet, it searches the label forwarding table according to the outer layer label SRGB_PE2 [index_PE3] of the SR list, pops the outer layer label and forwards the data packet to PE3.

After the PE3 receives the data packet, it searches the outer layer label forwarding table according to the outer layer label SRGB_PE3 [index_PE5] of the SR list and exchanges the outer layer label to SRGB_P2 [index_PE5] to transfer the data packet to P2; here, the exchange of the outer layer label is the common technology to those skilled in the art and is not used to limit the protection scope of the present invention, it will not be repeated here.

P2 is the direct connected next hop of PE3, after PE3 receives the data packet, it searches the label forwarding table according to the outer layer label SRGB_P2 [index_PE5] of the SR list, pops the outer layer label and forwards the data packet to PE5.

In the second embodiment, it is assumed that an end-to-end tunnel from PE1 to PE5 is specified to pass PE2, PE3 and PE5; and assuming that, the SR list on PE1 is calculated by PE1 itself through the routing protocol, then the SR list on PE1 is: [SRGB_P1[index_PE2], SRGB_PE2[index_PE3], SRGB_PE3 [index_PE5]], the data packet format issued on PE1 is shown in FIG 4, combined with FIG.2 or FIG.4, the forwarding process of data packets is exactly the same as that of the first embodiment, it will not be repeated here.

FIG. 5 is a schematic diagram of a data packet format carrying an SR packet header in a third embodiment of the forwarding data packet of the present invention, in the third embodiment, it is assumed that an end-to-end tunnel from PE1 to PE5 is specified to pass PE2 and PE5; in this embodiment, it is assumed that in the scenario of importing the route, an egress label corresponding to the first segment calculated by the controller is a label assigned by the directly-connected next hop of the segment on the head node to the segment, and, assuming that, the SR list on PE1 is issued by the controller such as a centralized device, then the SR list is issued by the controller is: [SRGB_P1[index_PE2], SRGB_PE2[index_PE5]], the data packet format issued on PE1 is shown in FIG. 5, combined with FIG.2 or FIG.3, the forwarding process of data packets is as follows.

P1 is the direct connected next hop of PE1, after P1 receives the data packet, it searches the label forwarding table according to the outer layer label SRGB_P1[index_PE2] of the SR list, pops the outer layer label and forwards the data packet to PE2.

PE2 is the directly connected next hop of P1, after PE2 receives the data packet, it searches the label forwarding table according to the outer layer label SRGB_PE2 [index_PE5] of the SR list, and exchanges the outer layer label to SRGB_PE4 [index_PE5] and forwards the data packet to PE4. In the present embodiment, it is assumed that PE4 is an optimal path to PE5.

After receiving the data packet, PE4 searches the label forwarding table according to SRGB_PE4 [index_PE5] of the SR list, and exchanges the outer label to SRGB_P2 [index_PE5] and forwards the data packet to P2.

P2 is the direct connected next hop of PE4, after receiving the data packet, it searches the label forwarding table according to the outer layer label SRGB_P2[index_PE5] of the SR list, pops the outer layer label and forwards the data packet to PE5.

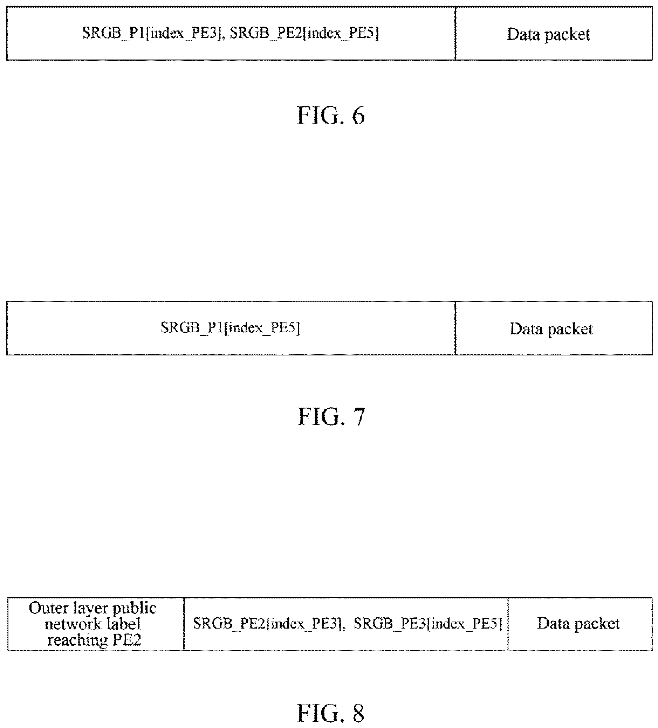

FIG. 6 is a schematic diagram of a data packet format carrying an SR packet header in a fourth embodiment of the present invention, in the fourth embodiment, it is assumed that an end-to-end tunnel from PE1 to PE5 is specified to pass PE3 and PE5; assuming that, the SR list on PE1 is generated by PE1 according to the segment path information and the SR information, then the SR list on PE1 is: [SRGB_P1[index_PE3], SRGB_PE3[index_PE5], the data packet format issued on PE1 is shown in FIG. 6, combined with FIG.2 or FIG.3,the forwarding process of data packet is as follows.

After receiving the data packet, P1 searches the label forwarding table according to the outer layer label SRGB_P1 [index_PE3] of the SR list, and exchanges the outer layer label to SRGB_PE2 [index_PE3] and forwards the data packet to PE2.

After the PE2 receives the data packet, it searches the label forwarding table according to the outer layer label SRGB_PE2 [index_PE3] of the SR list, pops the outer layer label, and forwards the data packet to PE3.

After the PE3 node receives the packet, it searches the label forwarding table according to the outer layer label SRGB_PE3 [index_PE5] of the SR list, and exchanges the outer layer label to SRGB_P2 [index_PE5] and forwards the data packet to P2.

After the P2 node receives the data packet, it searches the label forwarding table according to the outer layer label SRGB_P2 [index_PE5] of the SR list, pops the outer layer label, and forwards the data packet to PE5.

FIG. 7 is a schematic diagram of a data packet format carrying an SR packet header in a fifth embodiment of the forwarding data packet of the present invention, in the fifth embodiment, it is assumed that an end-to-end tunnel from PE1 to PE5 is specified to pass PE5; in this embodiment, it is assumed that in the scenario of importing the route, an egress label corresponding to the first segment calculated by the controller is a label assigned by the directly-connected next hop of the segment on the head node to the segment, and assuming that, the SR list on PE1 is issued by the controller such as a centralized device, then the SR list issued by the controller is: SRGB_PE1[index_PE5]], the data packet format issued on PE1 is shown in FIG. 7, combined with FIG.2 or FIG.3,the forwarding process of data packets is as follows.

After receiving the data packet, P1 searches the label forwarding table according to SRGB_P1 [index_PE5] of the SR list, and exchanges the outer layer label to SRGB_PE2 [index_PE5] and forwards the data packet to PE2.

After receiving the data packet, PE2 searches the label forwarding table according to SRGB_PE2 [index_PE5] of the SR list, and exchanges the outer layer label to SRGB_PE4 [index_PE5] and forwards the data packet to PE4. In the present embodiment, it is assumed that PE4 is an optimal path to PE5.

After receiving the data packet, PE4 searches the label forwarding table according to SRGB_PE4 [index_PE5] of the SR list, and exchanges the outer layer label to SRGB_P2 [index_PE5], and then forwards the data packet to P2.

After the P2 receives the data packet, it searches the label forwarding table according to the outer layer label SRGB_P2 [index_PE5] of the SR list, pops the outer layer label, and forwards the data packet to PE5.

FIG. 8 is a schematic diagram of a data packet format carrying an SR packet header in a sixth embodiment of the forwarding data packet of the present invention. In the sixth embodiment, it is assumed that an end-to-end tunnel from PE1 to PE5 is specified to pass PE3 and PE5; in this embodiment, it is assumed that in the scenario of importing the route, an egress label corresponding to the first segment calculated by the controller is a label assigned by the non-directly connected next hop of the BGP of the segment on the BGP head node to the segment, and then it iterates the public network outer layer tunnel. Then, the SR list issued to the PE1 by the controller and other centralized device is: [SRGB_PE2][index_PE3], SRGB_PE3 [index_PE5]], the data packet format sent on PE1 is shown in FIG. 9, combined with FIG. 2, the forwarding process of data packets is as follows.

PE1 obtains an outer layer public network label according to the outer layer label SRGB_PE2 [index_PE3] of the SR list, and its outer layer public network label is a label that reaches PE2. In the present embodiment, the outer layer public network tunnel can be a tunnel established through the SR/LDP/RSVP protocol, the outer layer label is a label assigned by the SR/LDP/RSVP protocol. PE1 places the outer layer public network label reaching PE2 on the SR list and sends the data packets, in the middle, when passing through the P, outer layer public network label exchange should be performed.

After the P2 receives the data packet, it pops the outer layer public network label, and it searches the label forwarding table according to the outer layer label SRGB_P2 [index_PE3] of the SR list, pops the outer layer label, and forwards the data packet to PE3.

After the PE3 receives the data packet, it searches the label forwarding table according to the outer layer label SRGB_PE3 [index_PE5] of the SR list and finds that the PE5 is not a direct connected link, searches for an existing tunnel that can reach the PE5, obtains the outer layer public network label, in the present embodiment, the outer layer public network tunnel can be a tunnel established through SR/LDP/RSVP protocol, and its outer layer label is a label assigned by using SR/LDP/RSVP protocol. PE3 exchanges the label SRGB_PE3 [index_PE5] of the SR list to the outer layer public network label reaching PE5 and sends the data packet to PE5.

The embodiment of the present invention further discloses a computer program, including program instructions, which, when being executed by a computer, enable the computer to execute any one of the abovementioned SR information acquisition methods.

The embodiment of the present invention further discloses a carrier carrying the computer program.

The embodiment of the present invention further discloses a computer program, including program instructions, which, when being executed by a computer, enable the computer to execute any one of the abovementioned SR network establishment method.

The embodiment of the present invention further discloses carriers carrying the computer program.

The above description is only preferred embodiments of the present invention, and is not intended to limit the protection scope of the present invention, which is defined by the appended claims.

### Industrial Applicability

With the method of the technical scheme of the present invention, the SR information of the cross-domain nodes within the SR domain is notified and interchanged by extending the BGP between the different AS domains, such that the border nodes of different AS domains in the SR domain know each other their own SR information, realizing the interchanging of SR Information in cross-domain scenario.

Further, using the SR information obtained by the method of the technical scheme of the present invention, the head node acquires the SR information list (SR list), carries the generated SR list outside the data packet, and the shortest path forwarding is performed on the data packet according to the SR information specified by the SR list. Thus an end-to-end SR network is established.

Therefore, the present invention has very strong industrial applicability.

## Claims

1. A segment routing, SR, information acquisition method, **characterized by** comprising:
notifying and interchanging the SR information between cross-domain nodes within the SR domain through an extended multi-protocol border gateway protocol, MP-BGP, or notifying and interchanging the SR information between border nodes within the AS domain and the cross-domain nodes through the extended MP-BGP (101); wherein the SR information comprises at least one or more pieces of segment routing global block, SRGB, and an offset, index; wherein the extended MP-BGP comprises:
in BGP-based Multi-Protocol Reachable Network Layer Reachability Information, MP_REACH_NLRI, adding an Address Family Identifier, AFI, for identifying an SR, one or more Subsequent Address Family Identifiers, SAFIs, and BGP Network Layer Reachability Information, NLRI, for carrying SRGB and index;
the method further comprising:
notifying the index through the added NLRI, while carrying the SRGB through an extended Open message; or,
carrying both the index and SRGB through a path attribute in an extended Update message.

2. The SR information acquisition method according to claim 1, wherein, a format of the added NLRI is a TLV format.

3. The SR information acquisition method according to claim 1, wherein, when the Index and SRGB in the SR information are both carried by the NLRI,
the step of notifying and interchanging the SR information between cross-domain nodes within SR domain through an extended MP-BGP comprises: when an IGP route is imported into the BGP protocol, importing an MP-BGP route into the IGP protocol, importing the index and SRGB along with the route;
the step of notifying and interchanging the SR information between border nodes within the AS domain and the cross-domain nodes through the extended MP-BGP comprises: when the MP-BGP both is used between both the border nodes within the AS domain and the cross-domain nodes, not importing an MP-BGP on an autonomous system border router, ASBR, node into the IGP protocol.

4. The SR information acquisition method according to claim 3, further comprising: determining whether the SR information is notified each other through the MP-BGP between the border nodes in the AS domain according to a configuration in the following way that:
when an SR-enabled dynamic IGP protocol is configured in the AS domain, it is not necessary to notify through the MP-BGP; when only a static route is configured in the AS domain, it is necessary to notify through the MP-BGP.

5. The SR information acquisition method according to claim 1, wherein, when the index is notified by the NLRI, the SRGB is notified by an extended Open message,
the step of notifying and interchanging the SR information between cross-domain nodes within the SR domain through an extended MP-BGP comprises: when the IGP route is imported into the BGP protocol and the MP-BGP route is imported into the IGP protocol, importing the index along with the route; wherein the SRGB notification is the SRGB information of the node itself;
the step of notifying and interchanging the SR information between border nodes within the AS domain and the cross-domain nodes through the extended MP-BGP comprises: when the MP-BGP is used between both the border nodes within the AS domain and the cross-domain nodes, not importing the MP-BGP on the ASBR node into the IGP protocol, notifying and interchanging the SR information of current nodes between the border nodes in the AS domain and the cross-domain nodes through the extended MP-BGP protocol.

6. The SR information acquisition method according to claim 1, wherein, when the Index and the SRGB are both carried by the path attribute in the extended Update message,
the step of notifying and interchanging the SR information between cross-domain nodes within the SR domain through an extended MP-BGP comprises: when the IGP route is imported into the BGP protocol and the MP-BGP route is imported into the IGP protocol, importing the index and the SRGB along with the route;
the step of notifying and interchanging the SR information between border nodes within the AS domain and the cross-domain nodes through the extended MP-BGP comprises: when the MP-BGP is used between both the border nodes within the AS domain and the cross-domain nodes, not importing the MP-BGP on the ASBR node into IGP protocol, notifying and interchanging the SR information of current nodes between the border nodes in the AS domain and the cross-domain nodes through the extended MP-BGP protocol.

7. A segment routing, SR, network establishment method, comprising: a head node obtaining an SR information list, SR list, according to the SR information acquisition method of any one of claims 1 to 6; the head node carrying the SR list outside a data packet, and performing shortest path forwarding on the data packet according to SR information specified by the SR list.

8. The SR network establishment method according to claim 7, wherein, the header node obtaining the SR list comprises: issuing by a centralized device, or generating or configuring statically according to segmented path information and the SR information,
and,
wherein, the node obtains the SR list by issuing by the centralized device; the method further comprises:
the controller obtaining the SR information of all nodes in the SR domain through an extended BGP.

9. A computer program, comprising program instructions, which, when being executed by a computer, enable the computer to execute the SR information acquisition method of any one of claims 1-6.

10. A carrier carrying the computer program according to claim 9.

11. A computer program, comprising program instructions, which, when being executed by a computer, enable the computer to execute the SR network establishment method of any one of claims 7-8.

12. A carrier carrying the computer program according to claim 11.

## Patentansprüche

1. Segmentroutungs (SR)-Informationserfassungsverfahren, **dadurch gekennzeichnet, dass** es Folgendes umfasst:
Übermitteln und Austauschen der SR-Informationen zwischen Kreuzdomänenknoten innerhalb der SR-Domäne durch ein erweitertes Multi-Protocol Border Gateway Protocol (MP-BGP), oder Übermitteln und Austauschen der SR-Informationen zwischen Grenzknoten innerhalb der AS-Domäne und den Kreuzdomänenknoten durch das erweiterte MP-BGP (101);
wobei die SR-Informationen mindestens einen oder mehrere Teile eines Segment Routing Global Block (SRGB) und einen Versatz (Index) umfassen;
wobei das erweiterte MP-BGP Folgendes umfasst:
in BGP-basierten Multi-Protocol Reachable Network Layer Reachability Information (MP_REACH_NLRI, Hinzufügen eines Address Family Identifier (AFI) zum Identifizieren eines SR, eines oder mehrerer Subsequent Address Family Identifiers (SAFIs), und BGP Network Layer Reachability Informationen (NLRI) zum Transportieren des SRGB und des Index;
wobei das Verfahren des Weiteren Folgendes umfasst:
Übermitteln des Index durch die hinzugefügten NLRI, während der SRGB durch eine erweiterte Open-Nachricht transportiert wird; oder
Transportieren sowohl des Index als auch des SRGB durch ein Pfadattribut in einer erweiterten Update-Nachricht.

2. SR-Informationserfassungsverfahren nach Anspruch 1, wobei ein Format der hinzugefügten NLRI ein TLV-Format ist.

3. SR-Informationserfassungsverfahren nach Anspruch 1, wobei, wenn der Index und der SRGB in den SR-Informationen beide durch die NLRI transportiert werden,
der Schritt des Übermittelns und Austauschens der SR-Informationen zwischen Kreuzdomänenknoten innerhalb einer SR-Domäne durch einen erweiterten MP-BGP Folgendes umfasst: wenn eine IGP-Route in das BGP-Protokoll importiert wird, Importieren einer MP-BGP-Route in das IGP-Protokoll, Importieren des Index und des SRGB zusammen mit der Route;
der Schritt des Übermittelns und Austauschens der SR-Informationen zwischen Grenzknoten innerhalb der AS-Domäne und den Kreuzdomänenknoten durch den erweiterten MP-BGP Folgendes umfasst: wenn das MP-BGP sowohl zwischen den Grenzknoten innerhalb der AS-Domäne als auch den Kreuzdomänenknoten verwendet wird, kein Importieren eines MP-BGP auf einem Autonomous System Border Router (ASBR)-Knoten in das IGP-Protokoll.

4. SR-Informationserfassungsverfahren nach Anspruch 3, das des Weiteren Folgendes umfasst: Bestimmen, ob die SR-Informationen einander durch das MP-BGP zwischen den Grenzknoten in der AS-Domäne gemäß einer Konfiguration in der Weise bekannt gegeben werden, dass:
wenn ein SR-befähigtes dynamisches IGP-Protokoll in der AS-Domäne konfiguriert ist, es nicht notwendig ist, durch das MP-BGP zu übermitteln; und wenn nur eine statische Route in der AS-Domäne konfiguriert ist, es notwendig ist, durch das MP-BGP zu übermitteln.

5. SR-Informationserfassungsverfahren nach Anspruch 1, wobei, wenn der Index durch die NLRI übermittelt wird, der SRGB durch eine erweiterte Open-Nachricht übermittelt wird,
der Schritt des Übermittelns und Austauschens der SR-Informationen zwischen Kreuzdomänenknoten innerhalb der SR-Domäne durch ein erweitertes MP-BGP Folgendes umfasst: wenn die IGP-Route in das BGP-Protokoll importiert wird und die MP-BGP-Route in das IGP-Protokoll importiert wird, Importieren des Index zusammen mit der Route; wobei die SRGB-Benachrichtigung die SRGB-Informationen des Knotens selbst sind;
der Schritt des Übermittelns und Austauschens der SR-Informationen zwischen Grenzknoten innerhalb der AS-Domäne und den Kreuzdomänenknoten durch das erweiterte MP-BGP Folgendes umfasst: wenn das MP-BGP sowohl zwischen den Grenzknoten innerhalb der AS-Domäne als auch den Kreuzdomänenknoten verwendet wird, kein Importieren des MP-BGP auf dem ASBR-Knoten in das IGP-Protokoll, Übermitteln und Austauschen der SR-Informationen momentaner Knoten zwischen den Grenzknoten in der AS-Domäne und den Kreuzdomänenknoten durch das erweiterte MP-BGP-Protokoll.

6. SR-Informationserfassungsverfahren nach Anspruch 1, wobei, wenn der Index und der SRGB beide durch das Pfadattribut in der erweiterten Update-Nachricht transportiert werden,
der Schritt des Übermittelns und Austauschens der SR-Informationen zwischen Kreuzdomänenknoten innerhalb der SR-Domäne durch ein erweitertes MP-BGP Folgendes umfasst: wenn die IGP-Route in das BGP-Protokoll importiert wird und die MP-BGP-Route in das IGP-Protokoll importiert wird, Importieren des Index und des SRGB zusammen mit der Route;
der Schritt des Übermittelns und Austauschens der SR-Informationen zwischen Grenzknoten innerhalb der AS-Domäne und den Kreuzdomänenknoten durch das erweiterte MP-BGP Folgendes umfasst: wenn das MP-BGP zwischen sowohl den Grenzknoten innerhalb der AS-Domäne als auch den Kreuzdomänenknoten verwendet wird, kein Importieren des MP-BGP auf dem ASBR-Knoten in das IGP-Protokoll, Übermitteln und Austauschen der SR-Informationen momentaner Knoten zwischen den Grenzknoten in der AS-Domäne und den Kreuzdomänenknoten durch das erweiterte MP-BGP-Protokoll.

7. Segmentroutungs (SR)-Netzwerk-Herstellungsverfahren, das Folgendes umfasst:
ein Head-Knoten erhält eine SR-Informationsliste (SR-Liste) gemäß dem SR-Informationserfassungsverfahren nach einem der Ansprüche 1 bis 6;
der Head-Knoten transportiert die SR-Liste außerhalb eines Datenpaketes und führt ein Shortest Path Forwarding an dem Datenpaket gemäß durch die SR-Liste spezifizierten SR-Informationen aus.

8. SR-Netzwerk-Herstellungsverfahren nach Anspruch 7, wobei das Erhalten der SR-Liste durch den Header-Knoten Folgendes umfasst:
Ausgeben, durch eine zentralisierte Vorrichtung, oder statisches Generieren oder Konfigurieren gemäß Segmented Path-Informationen und den SR-Informationen; und
wobei der Knoten die SR-Liste durch Ausgeben durch die zentralisierte Vorrichtung erhält; wobei das Verfahren des Weiteren Folgendes umfasst:
der Controller erhält die SR-Informationen aller Knoten in der SR-Domäne durch ein erweitertes BGP.

9. Computerprogramm, das Programminstruktionen umfasst, die, wenn sie durch einen Computer ausgeführt werden, den Computer in die Lage versetzen, das SR-Informationserfassungsverfahren nach einem der Ansprüche 1-6 auszuführen.

10. Träger, der das Computerprogramm nach Anspruch 9 trägt.

11. Computerprogramm, das Programminstruktionen umfasst, die, wenn sie durch einen Computer ausgeführt werden, den Computer in die Lage versetzen, das SR-Netzwerk-Herstellungsverfahren nach einem der Ansprüche 7-8 auszuführen.

12. Träger, der das Computerprogramm nach Anspruch 11 trägt.

## Revendications

1. Procédé d'acquisition d'informations d'acheminement de segment, SR, **caractérisé en ce qu'**il comprend :
la notification et la permutation des informations de SR entre des noeuds de domaine croisé à l'intérieur du domaine de SR par l'intermédiaire d'un protocole de passerelle de frontière de protocoles multiples, MP-BGP, étendu, ou la notification et la permutation des informations de SR entre des noeuds de frontière à l'intérieur du domaine AS et les noeuds de domaine croisé par l'intermédiaire du MP-BGP étendu (101) ;
dans lequel les informations de SR comprennent un ou plusieurs éléments de bloc global d'acheminement de segment, SRGB, et d'un indice de décalage ;
dans lequel le MP-BGP étendu comprend :
dans des informations d'accessibilité de couche de réseau accessible par des protocoles multiples, MP_REACH_NLRI, sur la base de BGP, l'ajout d'un identifiant de famille d'adresses, AFI, pour identifier un SR, d'un ou plusieurs identifiants de famille d'adresses suivants, SAFI, et d'informations d'accessibilité de couche de réseau, NLRI, BGP pour transporter un SRGB et un indice ;
le procédé comprenant en outre :
la notification de l'indice par l'intermédiaire des NLRI ajoutées pendant le transport du SRGB par l'intermédiaire d'un message Open étendu ; ou
le transport à la fois de l'indice et du SRGB par l'intermédiaire d'un attribut de voie dans un message Update étendu.

2. Procédé d'acquisition d'informations de SR selon la revendication 1, dans lequel un format des NLRI ajoutées est un format TLV.

3. Procédé d'acquisition d'informations de SR selon la revendication 1, dans lequel, lorsque l'indice et le SRGB dans les informations de SR sont tous les deux transportés par les NLRI,
l'étape de la notification et de la permutation des informations de SR entre des noeuds de domaine croisé à l'intérieur du domaine de SR par l'intermédiaire d'un MP-BGP étendu comprend : lorsqu'un itinéraire IGP est importé dans le protocole BGP, l'importation d'un itinéraire MP-BGP dans le protocole IGP, et l'importation de l'indice et du SRGB avec l'itinéraire ;
l'étape de la notification et de la permutation des informations de SR entre des noeuds de frontière à l'intérieur du domaine AS et des noeuds de domaines croisés par l'intermédiaire du MP-BGP étendu comprend : lorsque le MP-BGP est utilisé entre les noeuds de frontière à l'intérieur du domaine AS et les noeuds de domaine croisé, la non-importation d'un MP-BGP sur un noeud de routeur de frontière de système autonome, ASBR, dans le protocole IGP.

4. Procédé d'acquisition d'informations de SR selon la revendication 3, comprenant en outre :
la détermination si les informations de SR sont notifiées, par l'intermédiaire du MP-BGP, entre les noeuds de frontière dans le domaine AS en fonction d'une configuration de la manière suivante : lorsqu'un protocole IGP dynamique activé par SR est configuré dans le domaine AS, il n'est pas nécessaire d'effectuer de notification par l'intermédiaire du MP-BGP ; lorsqu'un seul itinéraire statique est configuré dans le domaine AS, il est nécessaire d'effectuer une notification par l'intermédiaire du MP-BGP.

5. Procédé d'acquisition d'informations de SR selon la revendication 1, dans lequel, lorsque l'indice est notifié par les NLRI, le SRGB est notifié par un message Open étendu,
l'étape de la notification et de la permutation des informations de SR entre des noeuds de domaine croisé à l'intérieur du domaine SR par l'intermédiaire d'un MP-BGP étendu comprend : lorsque l'itinéraire IGP est importé dans le protocole BGP et l'itinéraire MP-BGP est importé dans le protocole IGP, l'importation de l'indice avec l'itinéraire ; dans lequel la notification de SRGB est les informations de SRGB du noeud proprement dit ;
l'étape de la notification et de la permutation des informations de SR entre des noeuds de frontière à l'intérieur du domaine AS et les noeuds de domaine croisé par l'intermédiaire du MP-BGP étendu comprend : lorsque le MP-BGP est utilisé entre les noeuds de frontière à l'intérieur du domaine AS et les noeuds de domaine croisé, la non-importation du MP-BGP sur le noeud ASBR dans le protocole IGP, et la notification et la permutation des informations de SR de noeuds actuels entre les noeuds de frontière dans le domaine AS et les noeuds de domaine croisé par l'intermédiaire du protocole MP-BGP étendu.

6. Procédé d'acquisition d'informations de SR selon la revendication 1, dans lequel, lorsque l'indice et le SRGB sont transportés par l'attribut de voie dans le message Update étendu,
l'étape de la notification et de la permutation des informations de SR entre des noeuds de domaine croisé à l'intérieur du domaine SR par l'intermédiaire d'un MP-BGP étendu comprend : lorsque l'itinéraire IGP est importé dans le protocole BGP et l'itinéraire MP-BGP est importé dans le protocole IGP, l'importation de l'indice et du SRGB avec l'itinéraire ;
l'étape de la notification et de la permutation des informations de SR entre des noeuds de frontière à l'intérieur du domaine AS et les noeuds de domaine croisé par l'intermédiaire du MP-BGP étendu comprend : lorsque le MP-BGP est utilisé entre les noeuds de frontière à l'intérieur du domaine AS et les noeuds de domaine croisé, la non-importation du MP-BGP sur le noeud ASBR dans le protocole IGP, et la notification et la permutation des informations de SR de noeuds actuels entre les noeuds de frontière dans le domaine AS et les noeuds de domaine croisé par l'intermédiaire du protocole MP-BGP étendu.

7. Procédé d'établissement de réseau d'acheminement de segment, SR, comprenant :
par un noeud de tête, l'obtention d'une liste d'informations de SR, liste SR, en fonction du procédé d'acquisition d'informations de SR selon l'une quelconque des revendications 1 à 6 ;
par le noeud de tête, le transport de la liste de SR à l'extérieur d'un paquet de données, et l'exécution d'un transfert sur la voie la plus courte du paquet de données en fonction des informations de SR spécifiées par la liste de SR.

8. Procédé d'établissement de réseau de SR selon la revendication 7, dans lequel l'obtention, par le noeud de tête, de la liste de SR comprend : l'émission par un dispositif centralisé, ou la génération ou la configuration statique en fonction d'informations de voie segmentée et des informations de SR, et
dans lequel le noeud obtient la liste de SR par l'émission par le dispositif centralisé ;
le procédé comprend en outre :
l'obtention, par l'organe de commande, des informations de SR de tous les noeuds dans le domaine de SR par l'intermédiaire d'un BGP étendu.

9. Programme informatique comprenant des instructions de programme qui, lorsqu'elles sont exécutées par un ordinateur, permettent à l'ordinateur d'exécuter le procédé d'acquisition d'informations de SR selon l'une quelconque des revendications 1 à 6.

10. Support portant le programme informatique selon la revendication 9.

11. Programme informatique, comprenant des instructions de programme qui, lorsqu'elles sont exécutées par un ordinateur, permettent à l'ordinateur d'exécuter le procédé d'établissement de réseau de SR selon l'une quelconque des revendications 7 et 8.

12. Support portant le programme informatique selon la revendication 11.
